# EUROPÄISCHE PATENTSCHRIFT

(11) **EP 1 419 807 B1**
(45) Veröffentlichungstag und Bekanntmachung des Hinweises auf die Patenterteilung: **19.10.2005**
(21) Anmeldenummer: 03025568.1
(22) Anmeldetag: 08.11.2003
(51) Int. Cl.: B01D 35/027, B01D 29/58

(54) **Filtereinrichtung mit einem auswechselbaren Filterelement**
Filter device with replaceable filter element
Dispositif de filtration avec cartouche filtrante remplaçable

(30) Priorität: 12.11.2002 DE 10252410
(43) Veröffentlichungstag der Anmeldung: 19.05.2004
(73) Patentinhaber: HYDAC FILTERTECHNIK GMBH, 66280 Sulzbach/Saar (DE)
(72) Erfinder: Wilkendorf, Werner, 66564 Ottweiler (DE); Marschall, Stefan, 66578 Schiffweiler (DE)
(74) Vertreter: Bartels, Martin Erich Arthur

(56) Entgegenhaltungen:
- DE-A- 3 607 569
- DE-A- 10 113 179
- DE-A- 10 207 633

## Beschreibung

Die Erfindung betrifft eine Filtereinrichtung mit einem auswechselbaren Filterelement, das in einem Behältnis für Flüssigkeiten, insbesondere für Hydraulikflüssigkeit, aufnehmbar ist, und eine Schmutzseite von einer Reinseite des Behältnisses trennt, und mit einer das Filterelement abnehmbar haltenden Aufnahme, die einen zur Reinseite des Behältnisses führenden Durchgang für gefilterte Flüssigkeit aufweist, wobei ein Rückhalteelement vorgesehen ist, das einen möglichen Durchtritt von Fremdkörpern durch die Öffnung des Durchganges zur Reinseite des Behältnisses hin verhindert.

Filtereinrichtungen dieser Art (vgl. DE 101 13 179 A1, US 3,726,403 und DE 36 07 569 A1) sind handelsüblich und kommen auf vielen technischen Gebieten zum Einsatz, namentlich bei Hydrosystemen, bei denen die Filtereinrichtung und ein Tank, dem rücklaufende Hydraulikflüssigkeit zuführbar ist, zu einer Baueinheit integriert sind, wobei die zu filtrierende, zum Tank rücklaufende Hydraulikflüssigkeit zur Schmutzseite des Filterelementes gelangt. Dieses ist bei den üblichen Filtereinrichtungen in einer die rücklaufende Flüssigkeit aufnehmenden Kammer des Behältnisses oder Tanks so angeordnet, dass es nach Öffnen eines Verschlußdeckels, der an einer Entnahmeöffnung an der oberen Behälterwand angebracht ist, aus der Kammer herausnehmbar, d.h. auswechselbar ist.

Beim Auswechseln des jeweils bekannten Filterelementes, wenn dieses von seiner Aufnahme abgezogen wird, die sich am Durchgang zur Reinseite des Behältnisses oder Tanks hin befindet, wird die Öffnung dieses Durchganges freigelegt. Bei zum Auswechseln des Filterelementes geöffnetem Verschlußdeckel besteht nun die Gefahr, dass Fremdkörper durch die Entnahmeöffnung für das Filterelement hindurch in das Behältnis fallen und durch den offenen Durchgang hindurch zur Reinseite gelangen.

Insbesondere bei Behältnissen von Hydrosystemen, die unter rauhen Betriebsbedingungen eingesetzt werden, wie dies insbesondere beispielsweise bei Baggertanks der Fall ist oder bei Tanks für andere Arbeitsgeräte für das Baugewerbe oder den Bergbau, besteht die Gefahr, dass bei Auswechselvorgängen des Filterelementes Kleinteile, wie Schrauben, Kleinwerkzeuge, Gesteinspartikel od. dgl., durch die Entnahmeöffnung hindurch zur Reinseite des Tanks gelangen können.

Sofern bei dem kegelstumpfförmigen Rückhalteelement nach der US 3,726,403 sowie dem kegelförmig ausgebildeten Rückhalteelement nach der DE 36 07 569 A1 feinporige Filtersiebe oder Filtermedien, wie Drahtgewebe, zum Einsatz kommen, sind diese empfindlich gegen Beschädigungen und für einen rauhen Betriebbedingungseinsatz wenig geeignet. Sofern bei der bekannten Filtereinrichtung nach der DE 101 13 179 A1 im Filterelement unter Verzicht eines zusätzlichen Siebes oder Filtergewebemediums ein kegelstumpfförmiger Schutzkorb zum Einsatz kommt, der eine grobmaschige Netzstruktur aus in jeweils einer Ebene liegenden Quer- und Längsstäben ausbildet, ist die Gefahr relativ groß, dass trotz der Schutz- oder Rückhaltevorrichtung Kleinteile auf die Reinseite in das Behältnis gelangen können.

Ausgehend von diesem Stand der Technik stellt sich die Erfindung die Aufgabe, eine Filtereinrichtung der erwähnten Art kostengünstig zu schaffen, bei der die Gefahr vermieden ist, dass bei Auswechselvorgängen des Filterelementes Fremdkörper zur Reinseite des betreffenden Behältnisses gelangen und insbesondere unter rauhen Betriebsbedingungen sich für diesen Aufgabenzweck als geeignet erweist. Eine dahingehende Aufgabe löst eine Filtereinrichtung mit den Merkmalen des Patentanspruches 1 in seiner Gesamtheit.

Dadurch, dass gemäß dem kennzeichnenden Teil des Patentanspruches 1 das Rückhalteelement in seinem Umriß der Mantelfläche eines Kegels entspricht, dass das Rückhalteelement eine Reihe von zur Achse dieses Kegels konzentrischer Ringkörper unterschiedlicher Durchmesser aufweist, die unter Bildung von ringsegmentförmigen Lücken zwischen benachbarten Ringkörpern durch Stege miteinander verbunden sind, und dass beim Auswechseln des Filterelementes das Rückhalteelement im Behältnis an der Stelle des möglichen Durchtritts von Fremdkörpern verbleibt, ist jedenfalls sichergestellt, dass ein beim Auswechseln des Filterelementes möglicher Durchtritt von Fremdkörpern durch die Öffnung des Durchganges zur Reinseite des Behälters hin mit Sicherheit verhindert ist.

Dank dieser Anordnung verbleiben gegebenenfalls durch die Entnahmeöffnung eingefallene Fremdkörper an der Aufnahme für das Filterelement, von wo sie bei Bedarf bei abgenommenem Filterelement durch die Entnahmeöffnung des Behälters wieder herausgenommen werden können. Durch die kegelige Ausgestaltung des Rückhalteelementes ist darüber hinaus sichergestellt, dass auf das Rückhalteelement auftreffende Fremdkörper nicht auf diesem liegen bleiben, sondern in Richtung der Aufnahme entsprechend von dem Rückhalteelement abfallen, wozu in vorteilhafter Weise die treppenförmig gestufte Ausbildung des Rückhalteelementes mit seinen konzentrisch vorstehenden Ringkörpern mit beiträgt. Aufgrund der wechselweisen gestuften Anordnung der auf Lücke gesetzten Ringkörper ist das Verhältnis der Oberfläche des Kegels zu der gesamten freien Querschnittsfläche als mögliche Durchtrittsfläche für Fluid und/oder Fremdkörper sehr klein und liegt ungefähr zwischen 2 bis 4, vorzugsweise bei dem Wert 3, so dass für einen Durchschnittsfachmann auf dem Gebiet der Filtrationstechnologie es überraschend ist, dass er hier sehr große Rückhaltewerte für Fremdkörper erreicht, ohne dass er hierfür empfindliche Sieb- oder Filtermedienstrukturen einsetzen muß, wie dies im Stand der Technik beispielsweise durch die DE 36 07 569 A1 oder die US 3,726,403 aufgezeigt ist. Auch ergeben sich im Hinblick auf die genannten Verhältniswerte hier deutlich bessere Rückhaltewerte als für die offene Maschenstruktur mit einer seitlichen Durchtrittsmöglichkeit für Fremdkörper nach der DE 101 13 179 A1.

Der vorzugsweise in der Art eines Kunststoffspritzgußerzeugnisses ausgebildete Schutzkorb als Rückhalteelement ist aufgrund der genannten Anordnung sehr robust und insbesondere bei rauhen Betriebsbedingungen ohne weiteres einsetzbar, wobei sich das dahingehende Rückhalteelement bei der Herstellung kostengünstig realisieren läßt.

Sofern das Rückhalteelement als Vorsprung kegelförmig ins Innere des Filterelementes hineinragt, ist somit die die Durchlässe für gefilterte Flüssigkeit aufweisende Oberfläche des Rückhalteelementes größer als die Querschnittsfläche des Durchganges zur Reinseite, so dass das Durchströmen eines gewünscht hohen Volumenstromes gefilterter Flüssigkeit durch das Rückhalteelement hindurch gewährleistet ist, selbst wenn, wie angesprochen, die einzelnen Durchlässe verhältnismäßig klein dimensioniert sind, weil wegen der zur Verfügung stehenden großen Oberfläche eine entsprechend große Anzahl von Durchlässen am Rückhalteelement vorgesehen sein kann. Des weiteren erlaubt die kegelmantelförmige Ausbildung des Rückhalteelementes eine strömungstechnisch günstige Betriebssituation, was sich insgesamt energetisch günstig für den Gesamtbetrieb der Filtereinrichtung auswirkt.

Vorzugsweise ist die Aufnahme für ein Filterelement in der Art einer Filterpatrone vorgesehen, deren innerer Hohlraum durch ein kreisrundes, flüssigkeitsdurchlässiges Stützrohr gebildet ist, das vom Filtermaterial umgeben ist. Bei derartigen Ausführungsbeispielen greift der vorspringende Teil des Rückhalteelementes in das dem Durchgang zugeordnete offene Ende des Stützrohres ein.

Vorzugsweise sind die Abmessungen der benachbarten Ringkörper des Rückhalteelementes derart gewählt, dass der radial innen liegende Rand jedes Ringkörpers auf einem kleineren oder nur geringfügig größeren Radius gelegen ist als der radial außen liegende Rand des jeweils benachbarten, der Spitze des Kegels näher liegenden Ringkörpers, so dass sich bei Blick längs der Kegelachse auf den Kegel eine mehr oder weniger vollständige Überdeckung jeder ringförmigen Lücke durch den jeweils darüberliegenden Ringkörper ergibt. Dies bedeutet zum einen, dass längs der Kegelachse auf das Rückhalteelement auffallende Fremdkörper sicher längs des schrägen Kegelmantels herabgleiten können, ohne durch die Lücken hindurchzutreten und zum anderen, dass trotz hohen Querschnittes der durch die Lücken gebildeten Flüssigkeitsdurchlässe eine große Sicherheit an Rückhaltewirkung für Fremdkörper erreicht wird, wobei die Lücken aufgrund ihrer im wesentlichen horizontalen Ausrichtung von der Seite her geringere Durchtrittsmöglichkeiten bieten als die bekannte Lösung nach der DE 101 13 179 A1.

Nachstehend ist die Erfindung anhand der Zeichnung im einzelnen erläutert.

Es zeigen:
- Fig.1: einen schematisch vereinfachten Längsschnitt einer in einen Baggertank integrierten Filtereinrichtung üblicher Art, die mit dem Anmeldungsgegenstand jedoch nicht gattungsgleich ist;
- Fig.2: einen schematisch vereinfacht gezeichneten Längsschnitt ei- ner ebenfalls üblichen, in einen Baggertank integrierten Fil- tereinrichtung der Gattung des Anmeldungsgegenstandes;
- Fig.3: einen der Fig.2 entsprechenden Schnitt, jedoch mit abge- nommenem Verschlußdeckel der Tank-Entnahmeöffnung und herausgenommenem Filterelement;
- Fig. 4: einen schematisch vereinfacht gezeichneten Längsschnitt ei- nes Ausführungsbeispiels der erfindungsgemäßen Filterein- richtung, integriert in einen Baggertank;
- Fig.5: eine gegenüber der Fig.4 vergrößerte, perspektivische Darstel- lung nur der für die Filtereinrichtung des Ausführungsbeispiels von Fig.4 vorgesehenen Aufnahme mit integriertem Rückhal- teelement;
- Fig.6: einen der Fig. 4 entsprechenden Schnitt, jedoch mit abge- nommenem Tank-Verschlußdeckel und herausgenommenem Filterelement und
- Fig.7: eine Draufsicht auf Fig.6.

Unter Bezugnahme auf die Zeichnungen ist die Erfindung nachstehend am Beispiel einer in einen Baggertank integrierten Filtereinrichtung erläutert. Es versteht sich, dass die Erfindung gleichermaßen mit Vorteil in Verbindung mit Behältnissen anwendbar ist, die zur Aufnahme andersartiger Flüssigkeiten vorgesehen sind, bei denen eine Filtration der betreffenden Flüssigkeit mittels eines im Behältnis untergebrachten, auswechselbaren Filterelementes stattfindet.

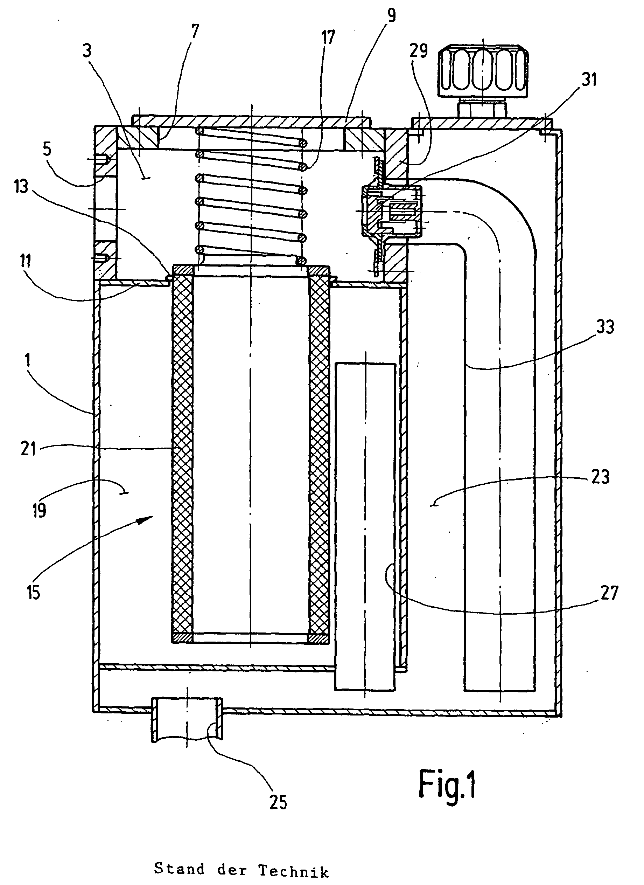

Die Fig.1 zeigt eine Filtereinrichtung üblicher Art, die in einen Baggertank 1 integriert ist. In dessen Innerem befindet sich eine Kammer 3 mit Anschlußeinrichtungen 5 für die Zufuhr rücklaufender, zu filternder Hydraulikflüssigkeit. An der Oberseite der Kammer 3 befindet sich eine Filter-Entnahmeöffnung 7, die durch einen abnehmbaren Verschlußdeckel 9 abgeschlossen ist. In der Bodenwand 11 der Kammer 3 befindet sich eine Öffnung, deren Rand eine Aufnahme 13 für ein Filterelement 15 bildet. Dieses Filterelement 15, das in der Art einer Filterpatrone ausgebildet ist, wird durch eine Druckfeder 17, die zwischen Filterelement 15 und Verschlußdeckel 9 eingespannt ist, an der Aufnahme 13 kraftschlüssig fixiert. Das Filterelement 15 erstreckt sich in eine zweite Kammer 19 des Tanks 1 hinein. Diese Kammer 19 nimmt die gefilterte Hydraulikflüssigkeit auf, die von der Kammer 3 her ins Innere des Filterelementes 15 eintritt und das Filtermaterial 21 des Filterelementes von innen nach außen durchströmt.

Die Reinseite des Tanks 1 ist durch eine weitere, dritte Kammer 23 mit Ablaufanschluß 25 gebildet. Die Verbindung zwischen den Kammern 19 und 23 erfolgt durch ein Überlaufrohr 27. Um übermäßige Differenzdrücke zwischen der schmutzseitigen Kammer 3 und der reinseitigen Kammer 23 zu vermeiden, befindet sich an der die Kammern 3 und 23 trennenden, inneren Wand 29 ein Bypaßventil 31 mit einem Bypaßrohr 33.

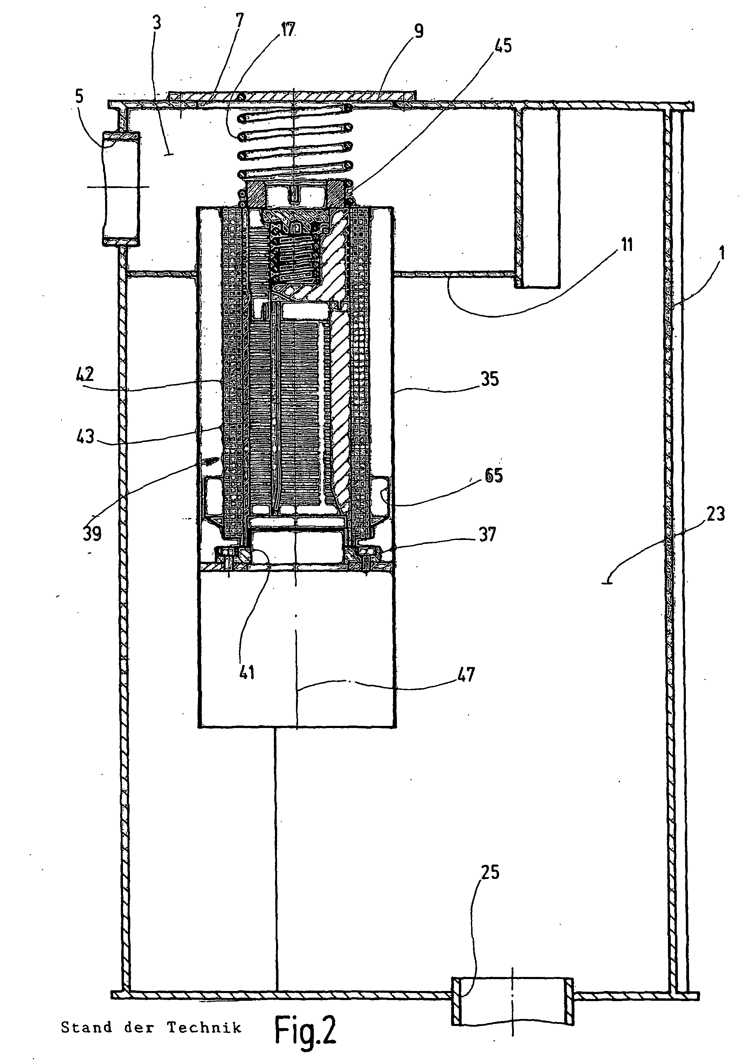

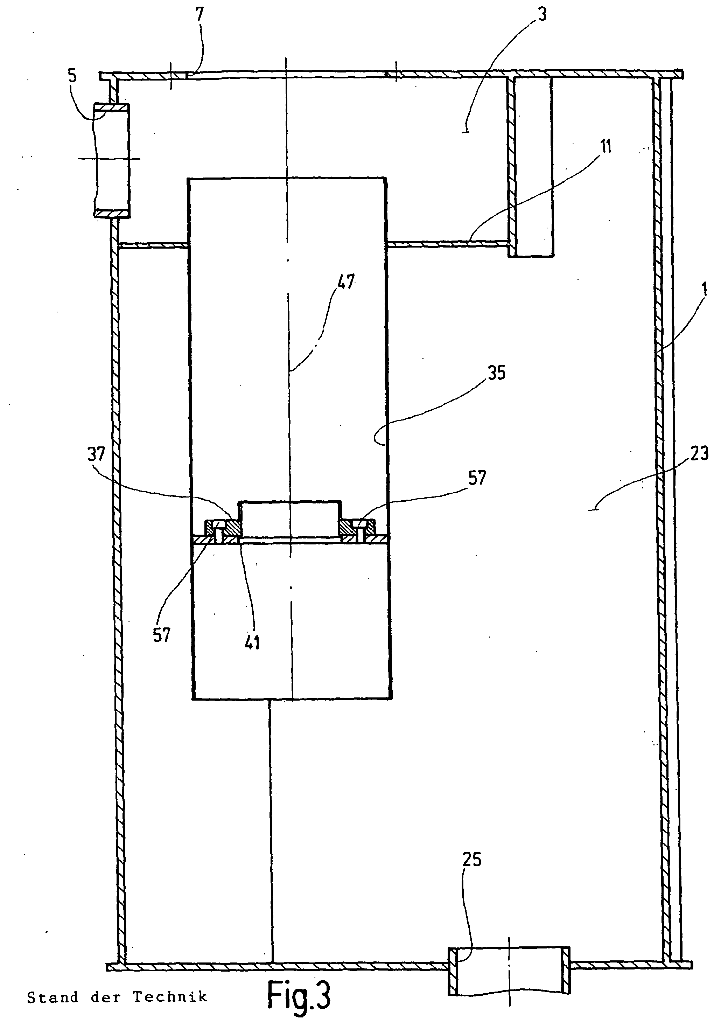

Die Fig.2 zeigt ebenfalls eine in einen Baggertank 1 integrierte Filtereinrichtung üblicher Art. Wie beim Vergleich der Fig.1 und 2 ohne weiteres ersichtlich ist, stellt die in Fig.1 gezeigte, bekannte Lösung, die mit dem Anmeldungsgegenstand nicht gattungsgleich ist, eine gegenüber der bekannten Lösung von Fig.2 weit aufwendigere Bauweise dar. Wie ersichtlich ist, befindet sich bei dem Beispiel von Fig.1 innerhalb des Tanks 1 ein Dreikammer-System, nämlich die schmutzseitige Kammer 3, eine erste reinseitige Kammer 19 und eine die eigentliche Reinseite des Tanks 1 bildende dritte Kammer 23. Bei dieser Gestaltung handelt es sich um eine aufwendige Schweißkonstruktion, wobei als Verbindung zwischen den Kammern 19 und 23 ein eingeschweißtes Überlaufrohr 27 vorgesehen ist. Bei der üblichen, in Fig.2 und 3 gezeigten Lösung handelt es sich demgegenüber um ein einfacheres Zweikammer-System, bei dem außer der schmutzseitigen Kammer 3 lediglich die den übrigen Innenraum bildende reinseitige Kammer 23 vorgesehen ist. Wie bei dem Beispiel von Fig.1 befindet sich in der Bodenwand 11 der schmutzseitigen Kammer 3 eine Öffnung, in der sich beim Beispiel von Fig.2 und 3 ein Rohrstück 35 befindet, an dem eine Aufnahme 37 für ein Filterelement 39 angeordnet ist. An der Aufnahme 37 befindet sich ein zentraler Durchgang 41, über den gefilterte Flüssigkeit unmittelbar zur Reinseite des Tanks 1 gelangt, d.h. zur Kammer 23.

Wie beim Beispiel von Fig.1 ist die Oberseite der schmutzseitigen Kammer 3 mit einer Entnahmeöffnung 7 versehen, die durch einen abnehmbaren Deckel 9 abgeschlossen ist. Zwischen diesem und dem Filterelement 39 ist wiederum eine Druckfeder 17 eingespannt, die das Filterelement 39 kraftschlüssig an die Aufnahme 37 anlegt.

Bei dem Filterelement 39 handelt es sich um eine Art Patronenfilter mit einem von Filtermaterial 42 umgebenen, inneren Stützrohr 43, das flüssigkeitsdurchlässig ist. Dieses ist an dem der Aufnahme 37 zugewandten, unteren Ende offen, während sich am oberen Ende ein Bypaßventil 45 befindet, das bei einer bestimmten Druckdifferenz zwischen Kammer 3 und dem inneren Hohlraum des Filterelementes 39 öffnet. Dieses wird von seiner Außenseite her zum inneren Hohlraum hin durchströmt, so dass die gefilterte Flüssigkeit über den Durchgang 41 zur Reinseite des Tanks 1 gelangt.

Der Vorteil der vereinfachten Bauweise des bekannten Beispiels von Fig. 2 und 3, verglichen mit der bekannten Lösung von Fig.1, muß mit dem Nachteil der verringerten Betriebssicherheit erkauft werden. Wie aus Fig.3 ersichtlich ist, die den Betriebszustand beim Auswechseln des Filterelementes 39 zeigt, besteht bei geöffnetem Deckel 9 und herausgenommenem Filterelement 39 die Gefahr, dass Fremdkörper längs der vertikalen Achse 47, die sich von der Öffnung 7 durch den Durchgang 41 der Aufnahme 37 hindurch zur Reinseite des Tanks 1 erstreckt, in die reinseitige Kammer 23 des Tanks 1 fallen können.

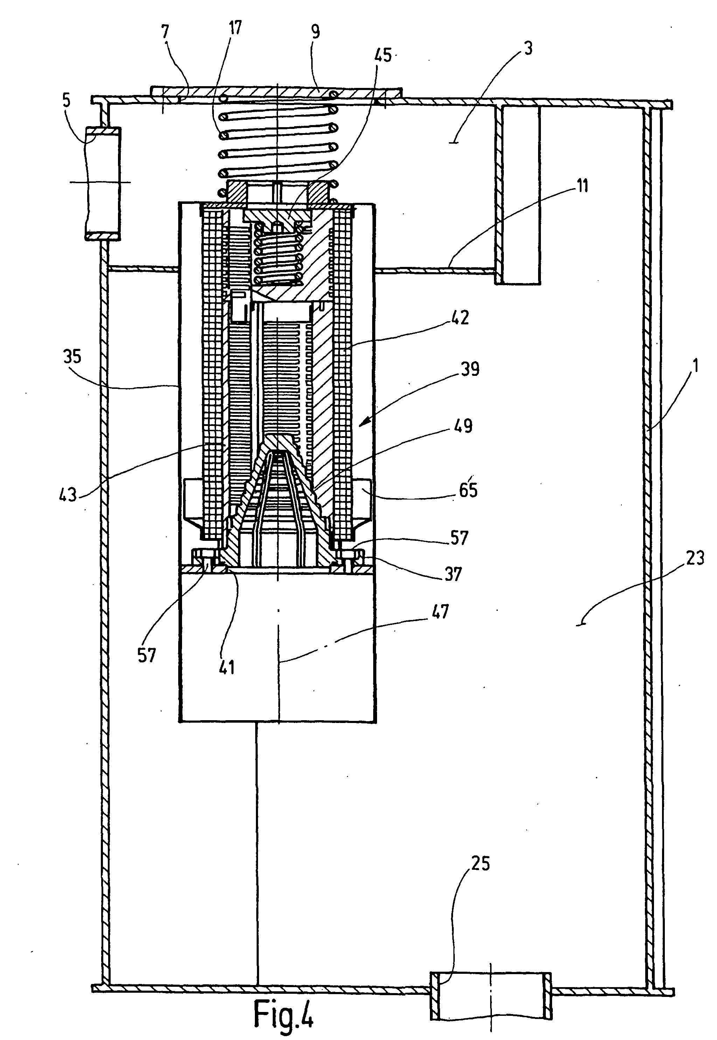

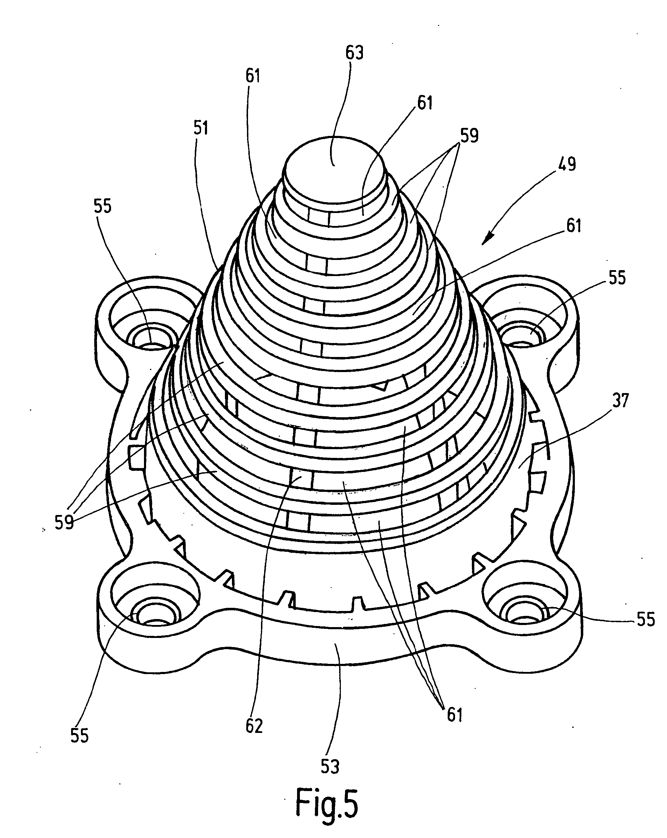

Bei der erfindungsgemäßen Filtereinrichtung ist diese Gefahr vermieden, obgleich es sich ebenfalls um eine vereinfachte Bauweise der in Fig.2 und 3 gezeigten Gattung handelt, also nicht um ein Dreikammer-System, wie die bekannte Lösung von Fig.1. In den Fig.4 bis 7 ist die Erfindung ebenfalls am Beispiel einer in einen Baggertank integrierten Filtereinrichtung verdeutlicht. Der wesentliche Unterschied gegenüber der bekannten Lösung von Fig.2 und 3 besteht darin, dss bei der Erfindung die Aufnahme 37 für das Filterelement 39, die am Durchgang 41 angeordnet ist, ein Rückhalteelement 49 aufweist, dessen Gestaltung am deutlichsten aus Fig.5 zu ersehen ist.

Beim Ausführungsbeispiel gemäß Fig.4 bis 7 entspricht das Filterelement 39 demjenigen der bekannten Lösung von Fig.2 und 3, weist also ein das Stützrohr 43 umgebendes Filtermaterial 42 auf, das von außen nach innen durchströmt wird. Wie bei dem Beispiel von Fig.2 und 3 ist das Filterelement 39 durch eine Druckfeder 17 kraftschlüssig an der Aufnahme 37 fixiert, wobei die Druckfeder 17 sich ebenfalls am Verschlußdeckel 9 abstützt, der die Entnahmeöffnung 7 des Tanks 1 abnehmbar verschließt. Wie bei dem Beispiel von Fig. 2 und 3 ist am oberen Ende des Stützrohres 43 ein Bypaßventil 45 vorgesehen, das das obere Ende des Stützrohres 43 normalerweise abschließt, jedoch bei Überschreiten einer bestimmten Druckdifferenz öffnet.

In das dem Durchgang 41 zugewandte, untere offene Ende des Stützrohres 43 greift das Rückhalteelement 49 mit einem vorspringenden Teil 51 ein, der sich aus der die Anlagefläche für das Filterelement 39 bildenden Aufnahme 37 kegelförmig erhebt. Der äußere Rand der Aufnahme 37 ist durch einen Ringflansch 53 eingefaßt, der Befestigungslöcher 55 für Halteschrauben 57 aufweist, mit deren Hilfe die Aufnahme 37 am Rand der Öffnung des Durchgangs 41 befestigbar ist.

Wie insbesondere Fig.5 zeigt, ist der vorspringende Teil 51 des Rückhalteelementes 49 aus einer Folge übereinanderliegend angeordneter Ringkörper 59 aufgebaut, die über Stege 62 so miteinander verbunden sind, dass zwischen den Ringkörpern 59 jeweils ringförmige Lücken 61 gebildet werden, die Durchlässe für gefilterte Flüssigkeit bilden. Am oberen Ende ist der Teil 51 durch eine runde Abschlußplatte 63 geschlossen.

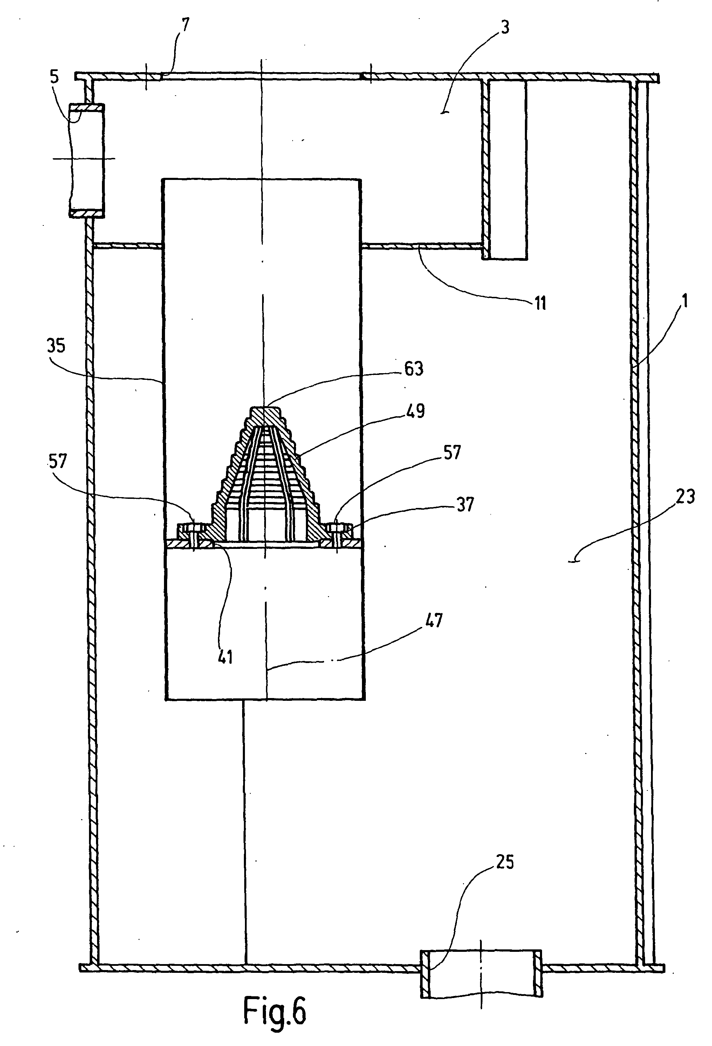

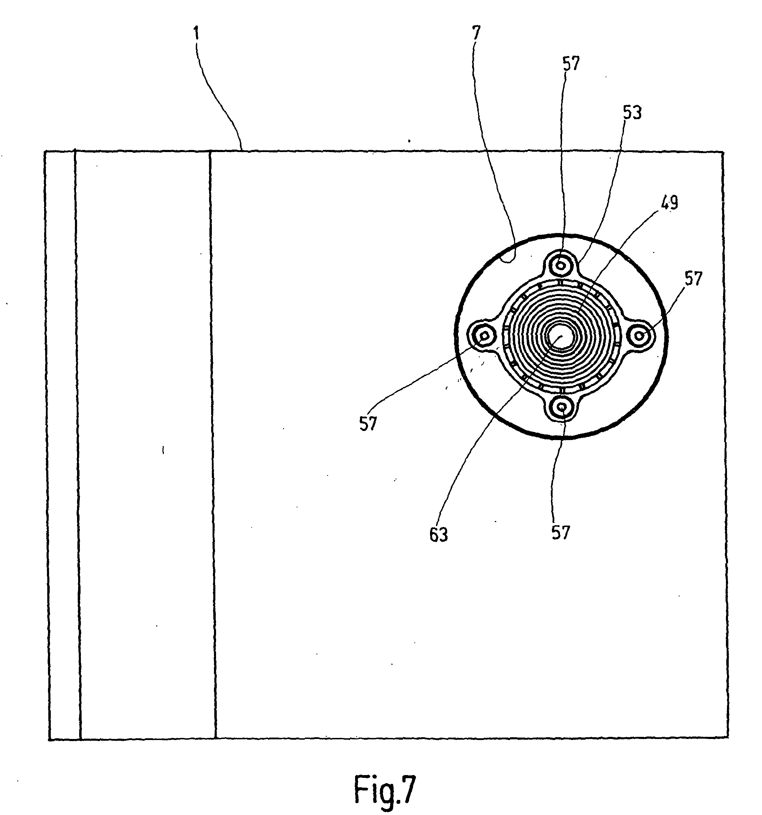

Fig.7 zeigt den Tank 1 mit von der Entnahmeöffnung 7 abgenommenem Verschlußdeckel 9 und ohne eingesetztes Filterelement 39. Ein gegebenenfalls längs der vertikalen Achse 47 (s. Fig.4 und 6) durch die Öffnung 7 fallender Fremdkörper fällt auf die Oberfläche des Rückhalteelementes 49, welches den Durchtritt des Fremdkörpers durch die Öffnung des Durchganges 41 verhindert. Bei der kegelartigen Formgebung des Teils 51 des Rückhalteelementes 49 gleiten etwa eingefallene Fremdkörper über die Ränder der Ringkörper 59, ohne in die Lücken 61 einzutreten. Die Abmessungen des vorspringenden Teils 51 des Rückhalteelementes 49 können so gewählt sein, dass, wenn von oben her längs der vertikalen Achse 47 auf das Rückhalteelement 49 geblickt wird, die Lücken 61 jeweils vom Rand des jeweils darüberliegenden Ringkörpers 59 zumindest teilweise überdeckt werden, wobei die oberste Lücke 61 von der oberen Abschlußplatte 63 in entsprechender Weise übergriffen wird. Trotz eines großen Durchlaßquerschnittes, der durch die Lücken 61 gebildet wird, ergibt sich dadurch eine sehr hohe Sicherheit gegen ein Hindurchtreten von Fremdkörpern selbst kleiner Abmessungen durch die Lücken 61 hindurch.

Das Rückhalteelement 49 kann mit seinem vorspringenden Teil 51, also der Platte 63, der Stege 62 und der Ringkörper 59, zusammen mit der Aufnahme 37 und dem diese einfassenden Ringflansch 53 einstückig ausgebildet sein, vorzugsweise durch ein Spritzgußteil aus Kunststoff.

Bei dem Filterelement 39 kann es sich um ein beliebiges, patronenartig ausgebildetes Filterelement handeln, das mit seinem dem offenen Ende des Stützrohres 43 zugeordneten Endbereich an eine Aufnahme 37 andrückbar ist, an der sich ein Durchgang 41 befindet, der zur Reinseite des betreffenden Behälters führt. Bei dem in Fig.2 und 3 gezeigten Filterelement 39 befindet sich im Bereich des der Aufnahme 37 zugekehrten Endes ein umfänglicher, nach oben offener Trog 65, der eine Auffangwanne bildet, in der sich gegebenenfalls beim Filtrationsvorgang längs der Außenseite des Filtermaterials 42 abgleitende Schmutzpartikel ansammeln können.

Die konisch aufeinander zulaufenden Stege 62 stützen innenumfangsseitig das Rückhalteelement 49 ab und auf den Außenumfang der Stege 62 sind die einzelnen Ringkörper 59 aufgelegt und mit den Stegen vorzugsweise einstückig verbunden. Ähnlich wie die Ringkörper 59 sind auch die Stege 62 im Querschnitt quadratisch oder rechteckförmig ausgebildet und bis auf die obige Platte 63 bildet das dahingehende Rückhalteelement im wesentlichen einen Kegelmantel aus, wobei die Oberseite der Platte 63 derart gewählt ist, dass nach Möglichkeit keine Schmutz- oder Fremdteile auf der Platte 63 verbleiben können.

## Patentansprüche

1. Filtereinrichtung mit einem auswechselbaren Filterelement (39), das in einem Behältnis (1) für Flüssigkeiten, insbesondere für Hydraulikflüssigkeit, aufnehmbar ist und eine Schmutzseite (3) von einer Reinseite (23) des Behältnisses (1) trennt, und mit einer das Filterelement (39) abnehmbar haltenden Aufnahme (37), die einen zur Reinseite (23) des Behältnisses (1) führenden Durchgang (41) für gefilterte Flüssigkeit aufweist, wobei ein Rückhalteelement (49) vorgesehen ist, das einen möglichen Durchtritt von Fremdkörpern durch die Öffnung des Durchganges (41) zur Reinseite (23) des Behältnisses (1) verhindert, **dadurch gekennzeichnet, dass** das Rückhalteelement (49) in seinem Umriß der Mantelfläche eines Kegels entspricht, dass das Rückhalteelement (49) eine Reihe von zur Achse (47) des Kegels konzentrischer Ringkörper (59) unterschiedlicher Durchmesser aufweist, die unter Bildung von ringsegmentförmigen Lücken (61) zwischen benachbarten Ringkörpern (59) durch Stege (62) miteinander verbunden sind, und dass beim Auswechseln des Filterelementes (39) das Rückhalteelement (49) im Behältnis (1) an der Stelle des möglichen Durchtritts von Fremdkörpern verbleibt.

2. Filtereinrichtung nach Anspruch 1, **dadurch gekennzeichnet, dass** die Aufnahme (37) für ein Filterelement (39) vorgesehen ist, das von seiner Außenseite her zu einem reinseitigen, inneren Hohlraum hin durchströmbar ist, und dass das Rückhalteelement (49) einen vorspringenden, in den inneren Hohlraum des Filterelementes (39) eingreifenden Teil (51) aufweist, der Durchlässe (61) für die zur Reinseite (23) des Behältnisses (1) strömende Flüssigkeit besitzt.

3. Filtereinrichtung nach Anspruch 2, **dadurch gekennzeichnet, dass** die Aufnahme (37) für ein solches Filterelement (39) vorgesehen ist, dessen innerer Hohlraum durch ein kreisrundes, flüssigkeitsdurchlässiges Stützrohr (43) gebildet ist, das vom Filtermaterial (42) umgeben ist und in dessen dem Durchgang (41) zugeordnetes offenes Ende der vorspringende Teil (51) des Rückhalteelementes (49) eingreift.

4. Filtereinrichtung nach Anspruch 3, **dadurch gekennzeichnet, dass** das Rückhalteelement (49) mit einem im Umriß rotationssymmetrischen, zur Achse (47) des Stützrohres (43) konzentrischen Teil (51) in dieses eingreift.

5. Filtereinrichtung nach einem der Ansprüche 1 bis 4, **dadurch gekennzeichnet, dass** die einzelnen Stege (62) diametral zur Achse (47) des Kegels gegenüberliegend außenumfangsseitig eine Anlagefläche ausbilden für die Anlage mit der Innenumfangsseite der einzelnen konzentrischen Ringkörper (59), die in dem Maße im Durchmesser abnehmen, wie die Stege (62) sich im Umfang bedingt durch ihre Steigung konisch verjüngen.

6. Filtereinrichtung nach Anspruch 5, **dadurch gekennzeichnet, dass** die Ringkörper (59) zusammen mit den Stegen (62) einstückig das Rückhalteelement (49) bilden.

7. Filtereinrichtung nach den Ansprüchen 5 und 6, **dadurch gekennzeichnet, dass** der radial innenliegende Rand jedes Ringkörpers (59) auf einem kleineren oder nur geringfügig größeren Radius gelegen ist als der radial außenliegende Rand des jeweils benachbarten, der Spitze (63) des Kegels näherliegenden Ringkörpers (59).

8. Filtereinrichtung nach einem der Ansprüche 1 bis 7, **dadurch gekennzeichnet, dass** das Rückhalteelement (49) und ein die Anlagefläche für das Filterelement (39) bildender, am Durchgang (41) des Behältnisses (1) anbringbarer Ringflansch (53) der Aufnahme (37) für das Filterelement (39) einstückig miteinander ausgebildet sind.

9. Filtereinrichtung nach Anspruch 8, **dadurch gekennzeichnet, dass** Rückhalteelement (49) und Aufnahme (37) aus Kunststoff spritzgepreßt sind.

## Claims

1. Filter apparatus with a replaceable filter element (39) which can be received into a container (1) for fluids, especially for hydraulic fluids, and separates a dirty side (3) from a clean side (23) of the container (1), and with a take-up (37) disconnectably holding the filter element (39), which incorporates a passage (41) for filtered fluids leading to the clean side (23) of the container (1), whereby a retaining element (49) is envisaged, preventing a possible flow of foreign particles through the port of the passage (41) towards the clean side (23) of the container (1), **characterised in that** the retaining element (49) equals the jacket surface of a cone in its circumference, **in that** the retaining element (49) incorporates a number of annular elements (59) with different diameters that are concentric in the direction of the axis (47) of the cone, the same being connected with one another via bridges (62) whilst forming annular segment-shaped gaps (61) between adjacent annular elements (59), and **in that** the retaining element (49) remains in the container (1) at the location of a possible flow of foreign particles during replacement of the filter element (39).

2. Filter apparatus according to Claim 1, **characterised in that** the take-up (37) is envisaged for a filter element (39) which is flowed from the outside towards an internal space on the clean side, and **in that** the retaining element (49) incorporates a projecting part (51) engaging the internal space of the filter element (39), equipped with passages (61) for the fluid flowing towards the clean side (23) of the container (1).

3. Filter apparatus according to Claim 2, **characterised in that** the take-up (37) is envisaged for a filter element (39) whose internal space is formed by a circular, fluid-permeable support pipe (43) surrounded by filter material (42), and whose open end of the projecting part (51) associated with the passage (41) is engaged by the retaining element (49).

4. Filter apparatus according to Claim 3, **characterised in that** the retaining element (49) engages a circumferentially rotation symmetrical part (51) that is concentric towards the axis (47) of the support pipe (43).

5. Filter apparatus according to one of the Claims 1 to 4, **characterised in that** the individual bridges (62) form an abutment surface for abutment against the inner circumference surface of the individual concentric annular elements (59) diametrically opposite the outer circumference in relation to the axis (47) of the cone, the diameter of the same decreasing like the bridges (62) which conically reduce their circumference depending on their ascent.

6. Filter apparatus according to Claim 5, **characterised in that** the annular element (59) forms the retaining element (49) in one piece together with the bridges (62).

7. Filter apparatus according to Claims 5 and 6, **characterised in that** the radial inner edge of each annular element (59) lies on a smaller or only insubstantially larger radius than the outer radial edge of the relevant adjacent annular element (59) in the direction of the tip (63) of the cone.

8. Filter apparatus according to Claims 1 to 7, **characterised in that** the retaining element (49) and an annular flange (53) of the take-up (37) for the filter element (39) forming the abutment surface for the filter element (39) to be affixed to the passage (41) of the container (1) are constructed of one piece.

9. Filter apparatus according to Claim 8, **characterised in that** the retaining element (49) and take-up (37) consist of an injection moulded plastic.

## Revendications

1. Dispositif de filtrage avec un élément filtrant échangeable (39) qui peut être logé dans un récipient (1) pour liquides, en particulier pour du liquide hydraulique, et sépare un côté contaminé (3) d'un côté propre (23) du récipient (1), et avec un logement (37) maintenant l'élément filtrant (39) de manière amovible qui comporte un passage (41) menant au côté propre (23) du récipient (1) pour du liquide filtré, un élément de retenue (49) qui empêche une traversée possible de l'ouverture du passage (41) par des corps étrangers vers le côté propre (23) du récipient(1) étant prévu, **caractérisé en ce que** le contour de l'élément de retenue (49) correspond à la nappe d'un cône, **en ce que** l'élément de retenue (49) comporte une série de corps annulaires (59) de diamètres différents concentriques à l'axe (47) du cône qui sont reliés les uns aux autres par des brides (62) en formant des lacunes en forme de segments annulaires (61) entre des corps annulaires voisins (59) et **en ce que**, lors du remplacement de l'élément filtrant (39), l'élément de retenue (49) reste dans le réservoir (1) à l'emplacement du passage possible de corps étrangers.

2. Dispositif de filtrage selon la revendication 1, **caractérisé en ce que** le logement (37) est prévu pour un élément filtrant (39) qui peut être traversé par un flux de son côté extérieur vers un espace creux intérieur côté propre et **en ce que** l'élément de retenue (49) comporte une pièce en saillie (51) qui s'engrène dans l'espace creux intérieur de l'élément filtrant (39) et est dotée de passages (61) pour le liquide qui afflue vers le côté propre (23) du récipient (1).

3. Dispositif de filtrage selon la revendication 2, **caractérisé en ce que** le logement (37) est prévu pour un élément filtrant (39) dont l'espace creux intérieur est formé par un tube support (43) circulaire et perméable aux liquides, qui est entouré du matériau filtrant (42) et dans l'extrémité ouverte affectée au passage (41) duquel la pièce en saillie (51) de l'élément de retenue (49) s'engrène.

4. Dispositif de filtrage selon la revendication 3, **caractérisé en ce que** l'élément de retenue (49) s'engrène dans le tube support (43) avec un élément (51) au contour à symétrie de révolution concentrique à l'axe (47) de ce dernier.

5. Dispositif de filtrage selon une des revendications 1 à 4, **caractérisé en ce que** les différentes brides (62) forment diamétralement par rapport à l'axe (47) du cône de la face de la circonférence extérieure située en face une surface d'appui pour le contact avec la face circonférentielle intérieure des différents corps annulaires concentriques (59), dont le diamètre diminue à mesure que la circonférence des brides (62) décroît vers le haut.

6. Dispositif de filtrage selon la revendication 5, **caractérisé en ce que** les corps annulaires (59) forment avec les brides (62) l'élément de retenue (49) d'un seul tenant.

7. Dispositif de filtrage selon les revendications 5 et 6, **caractérisé en ce que** le bord intérieur radial de chaque corps annulaire (59) se situe sur un rayon plus petit ou seulement un petit peu plus grand que le bord radial extérieur du corps annulaire (59) voisin respectif plus proche de la pointe (63) du cône.

8. Dispositif de filtrage selon une des revendications 1 à 7, **caractérisé en ce que** l'élément de retenue (49) et une bride annulaire (53) du logement (37) pour l'élément filtrant (39) formant la surface d'appui pour l'élément filtrant (39) et pouvant être placée sur le passage (41) du récipient (1) sont formés d'un seul tenant.

9. Dispositif de filtrage selon la revendication 8, **caractérisé en ce que** l'élément de retenue (49) et le logement (37) sont en matière plastique moulée par transfert.
